# EUROPÄISCHE PATENTSCHRIFT

(11) **EP 3 441 653 B1**
(45) Veröffentlichungstag und Bekanntmachung des Hinweises auf die Patenterteilung: **13.05.2020**
(21) Anmeldenummer: 18185727.7
(22) Anmeldetag: 26.07.2018
(51) Int. Cl.: F16K 41/10, F16K 1/10, F16K 7/16, F16K 27/02

(54) **VENTILKÖRPER FÜR EIN SCHRÄGSITZVENTIL**
VALVE BODY FOR A SLANTED SEAT VALVE
CORPS DE SOUPAPE POUR UNE SOUPAPE À SIÈGE OBLIQUE

(30) Priorität: 07.08.2017 DE 102017117904
(43) Veröffentlichungstag der Anmeldung: 13.02.2019
(73) Patentinhaber: Gemü Gebr. Müller Apparatebau GmbH & Co. Kommanditgesellschaft, 74653 Ingelfingen (DE)
(72) Erfinder: Frankenbach, Klaus, 74670 Forchtenberg-Schleierhof (DE); Haidt, Harald, 74613 Öhringen (DE)
(74) Vertreter: DREISS Patentanwälte PartG mbB

(56) Entgegenhaltungen:
- EP-A1- 3 070 381
- WO-A1-99/67557
- GB-A- 506 075
- JP-A- 2013 023 992
- US-A- 2 685 426
- US-A- 5 280 872
- US-A1- 2013 008 542

## Beschreibung

Die Erfindung betrifft einen Ventilkörper für ein Schrägsitzventil.

Schrägsitzventile sind allgemein bekannt. Ein Absperrkörper wird zum Verschließen des Schrägsitzventils entlang einer Zustellachse auf einen Ventilsitz gedrückt. Der Ventilsitz ragt in einen Kanal hinein. Beispielhaft wird auf die DE 10 2013 215 266 A1 verwiesen.

Schrägsitzventile sind weitergehend aus den JP 2013 023992 A, WO 99/67557 A1, US 5 280 872 A, US 2013/008542 A1 und GB 506 075 A bekannt.

Die Aufgabe der vorliegenden Erfindung kann darin gesehen werden, einen höheren Durchfluss zu erzielen.

Die der Erfindung zugrunde liegende Aufgabe wird durch einen Ventilkörper nach dem Anspruch 1 gelöst.

Es wird ein Ventilkörper für ein Schrägsitzventil vorgeschlagen. Der Ventilkörper umfasst: einen Kanal, welcher zwei Anschlüsse miteinander verbindet, einen Ventilsitz, und eine Kammer zur Anordnung eines Absperrkörpers, wobei die Kammer entlang einer Zustellachse schräg in den Kanal hineinführt, und wobei ein zur Zustellachse lotrechter Durchmesser der Kammer in eine von dem Ventilsitz abgewandte Richtung zumindest abschnittsweise stetig zunimmt.

Die vorgeschlagene Durchmesserzunahme der Kammer ermöglicht einen gegenüber dem aus dem Stand der Technik bekannten Schrägsitzventil einen bis zu 30 % größeren Volumenstrom durch den Kanal. Der Absperrkörper taucht in die Kammer ein, um das Schrägsitzventil zu öffnen. Die Durchmesserzunahme der Kammer sorgt im geöffneten Zustand des Schrägsitzventils dafür, dass der Absperrkörper mit der Kammer einen Raum einschließt, welcher die Umströmung des Absperrkörpers verbessert und damit den möglichen Volumenstrom vergrößert. Darüber hinaus wird ein Hubweg des Absperrkörpers reduziert, was sich vorteilhaft auf die Ausbildung des Antriebs und auf die Größe des Ventils auswirkt. Durch die vorgeschlagene Durchmesserzunahme werden weitergehend Schmutzbereiche, in denen sich Schmutz/Fluide ungewollt anlagern können, reduziert bzw. verhindert.

Der Ventilsitz ragt in eine gedachte Verlängerung des Kanals, welche durch die Kammer führt, nicht hinein. Vorteilhaft kann der Ventilkörper dadurch in beide Richtungen leerlaufen, was die Abreinigbarkeit verbessert.

Eine vorteilhafte Ausführungsform zeichnet sich dadurch aus, dass der Ventilsitz eine sich kegelstumpfförmig zur Mitte der Kammer hin öffnende Fläche umfasst. Vorteilhaft öffnet sich der Ventilsitz in Richtung der Kammer und bildet somit einen Übergang von dem Kanal zu der Kammer. Ein im Querschnitt runder Sitzbereich des Absperrkörpers kann dadurch vorteilhaft eine weichdichtende Sitzdichtung bereitstellen.

Eine vorteilhafte Ausführungsform zeichnet sich dadurch aus, dass der Ventilkörper einen Befestigungsabschnitt für einen radial äußeren Bereich eines Membranabschnitts des Absperrkörpers umfasst, und wobei die Kammer ausgehend von der Zunahme des Durchmessers zumindest abschnittsweise eine stetige Abnahme des zur Zustellachse lotrechten Durchmessers in Richtung des Befestigungsabschnitts umfasst. Die stetige Abnahme des Durchmessers sorgt dafür, dass das Fluid im geöffneten Zustand keine Kanten umströmen muss und zu dem Membranabschnitt geleitet wird.
Eine vorteilhafte Ausführungsform zeichnet sich dadurch aus, dass sich ein größter und zur Zustellachse lotrechter Durchmesser der Kammer in einem Mittenbereich der Kammer befindet. Hierdurch wird ein dem Kanal abgewandter Raum freigegeben, welcher im zur Zustellachse lotrechten freigegebenen Querschnitt keine Sprünge aufweist. Dies verbessert die Umströmung des Absperrkörpers.

Des Weiteren wird ein Schrägsitzventil mit einem Ventilkörper nach einem der vorangehend beschriebenen Ausführungsformen vorgeschlagen. Das Schrägsitzventil umfasst: den Absperrkörper; eine Ventilspindel, an der der Absperrkörper befestigt ist; und einen Antrieb, der die Ventilspindel und damit den Absperrkörper entlang der Zustellachse zu einem Öffnen oder Schließen des Kanals bewegt.

Eine vorteilhafte Ausführungsform des Schrägsitzventils zeichnet sich dadurch aus, dass ein distaler Sitzabschnitt des Absperrkörpers einen abgerundeten Querschnitt aufweist. Damit wird eine weichdichtende Sitzdichtung bereitgestellt.

Eine vorteilhafte Ausführungsform des Schrägsitzventils zeichnet sich dadurch aus, dass ein Außenquerschnitt des Absperrkörpers in Richtung des Antriebs zumindest abschnittsweise stetig abnimmt. Hierdurch wird im geöffneten Zustand des Schrägsitzventils der vorgenannte Raum zwischen Absperrkörper und Kammer freigegeben. Eine vorteilhafte Ausführungsform des Schrägsitzventils zeichnet sich dadurch aus, dass der Absperrkörper in Richtung des Antriebs einen Membranabschnitt aufweist, wobei ein radial äußerer Bereich des Membranabschnitts zu dem Ventilkörper festgelegt ist. Hierdurch wird eine Bewegung des Absperrkörpers ermöglicht und gleichzeitig stellt der Membranabschnitt eine Trennung zwischen fluidführendem und nicht-fluidführendem Bereich sicher.

Eine vorteilhafte Ausführungsform des Schrägsitzventils zeichnet sich dadurch aus, dass der Antrieb und der Absperrkörper derart aufeinander abgestimmt sind, sodass der Absperrkörper sich in einer den Kanal öffnenden Endposition mit seinem größten Außendurchmesser in dem Mittenbereich der Kammer befindet. Hierdurch wird vorteilhaft der Raum zwischen dem Absperrkörper und der Kammer freigegeben, welcher die verbesserte Umströmung des Absperrkörpers ermöglicht.

Weitere Merkmale und Vorteile der Erfindung finden sich ferner in der nachfolgenden Beschreibung von Ausführungsbeispielen der Zeichnung. In der Zeichnung zeigen:
Figur 1 einen schematischen Schnitt eines Ventilkörpers; und
Figur 2-4 einen schematischen Schnitt eines Schrägsitzventils.

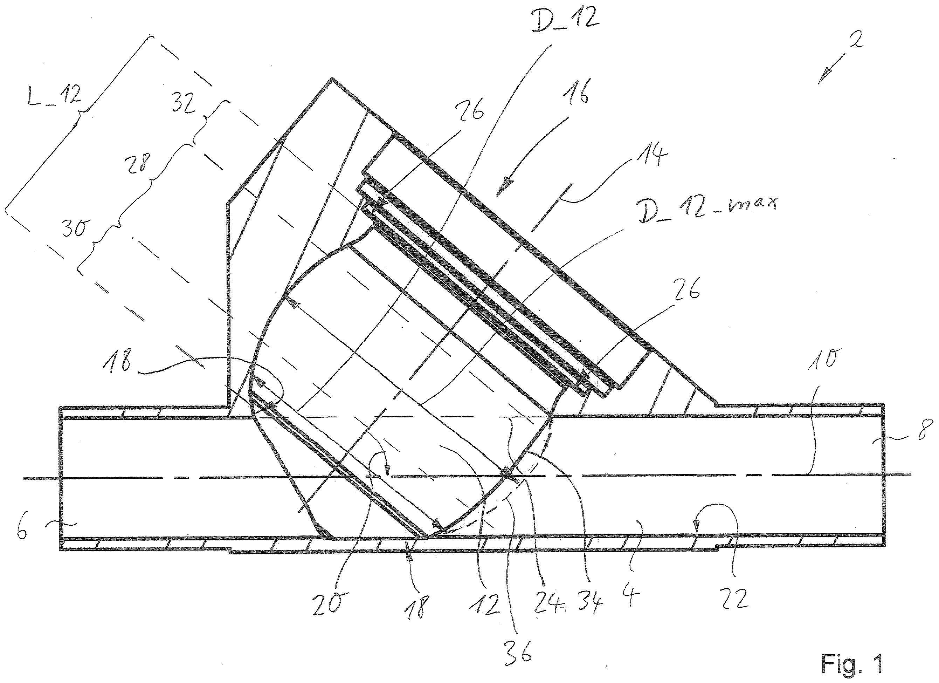

Figur 1 zeigt in einem schematischen Schnitt einen Ventilkörper 2. Der Ventilkörper 2 ist ohne Zwischenstück, ohne Antrieb und ohne Absperrkörper gezeigt. Der Ventilkörper 2 umfasst einen Kanal 4, der zwei Anschlüsse 6 und 8 miteinander verbindet. Der Kanal 4 erstreckt sich entlang einer Längsachse 10 und ist im Wesentlichen rotationssymmetrisch zu der Längsachse 10 aufgebaut. Selbstverständlich kann der Kanal 4 auch abweichend von der Längsachse 10 ausgestaltet sein.

Eine Kammer 12 ragt schräg von dem Kanal 4 ab und ist im Wesentlichen rotationssymmetrisch zu einer Zustellachse 14 aufgebaut. Die Zustellachse 14 und die Längsachse 10 schließen einen Winkel 20 ein, welcher in einem Bereich von 50° ± 10° liegt. Eine Öffnung 16 führt in die Kammer 12 und zu einem Ventilsitz 18. Der Ventilsitz 18 ist im Wesentlichen rotationssymmetrisch zur Zustellachse 14 und öffnet sich in Richtung der Öffnung 16. Insbesondere ist der Ventilsitz 18 kegelstumpfförmig ausgebildet. Im gezeigten Schnitt fällt der Ventilsitz 18 mit einer unteren Kante 22 des Kanals 4 zusammen. Auf der der Kante 22 gegenüberliegenden Seite des Kanals 4 ist der Ventilsitz 18 außerhalb einer gedachten Verlängerung 24 des Kanals 4 angeordnet. In Richtung des Anschlusses 6 geht die Kammer 12 also über den Ventilsitz 18 in den Kanal 4 über. Des Weiteren ragt der Ventilsitz 18 in die gedachte Verlängerung 24 des Kanals 4, welche durch die Kammer 12 führt, nicht hinein. In einer weiteren , jedoch nicht erfindungsgemäßen Ausführungsform ragt der Ventilsitz 18 in den Kanal 4 hinein, wobei der Ventilsitz maximal 10% des Durchmessers des Kanals 4 einnimmt.

Die Kammer 12 endet in einem Befestigungsabschnitt 26 für einen radial äußeren Bereich eines Membranabschnitts des Absperrkörpers. Der Befestigungsabschnitt 26 umfasst eine kreisringförmige Auflagefläche für den radial äußeren Bereich des Membranabschnitts, der zur Verklemmung des radial äußeren Bereichs dient. Die Kammer 12 mündet auf der dem Befestigungsabschnitt 26 gegenüberliegenden Seite in den Ventilsitz 18. Zwischen dem Ventilsitz 18 und dem Befestigungsabschnitt 26 weist die Kammer 12 eine Längserstreckung L_12 auf. Ein Mittenbereich 28 erstreckt sich in etwa über die Hälfte der Längserstreckung L_12. Ein distaler Bereich 30 ist hin zu dem Ventilsitz 18 angeordnet und umfasst in etwa ein Viertel der Längserstreckung L_12. Ein distaler, der Öffnung 16 zugewandter Bereich 32 umfasst in etwa ein Viertel der Längserstreckung L_12.

Die Kammer 12 ist im Wesentlichen rotationssymmetrisch zur Zustellachse 14 und geht entlang einer Kante 34 in den Kanal 4 über. Die rotationssymmetrische Ausbildung der Kammer 12 ist durch die gestrichelte Linie 36 angedeutet. Ein Durchmesser D_12 der Kammer 12 steht lotrecht zur Zustellachse 14, also beispielsweise auch lotrecht zur Zeichenebene und lotrecht zur Zustellachse 14. Der zur Zustellachse 14 lotrechte Durchmesser D_12 nimmt ausgehend von dem Ventilsitz 18 in Richtung der Öffnung 16 bis zu einem maximalen Durchmesser D_12_max stetig zu. Ausgehend von dem maximalen Durchmesser D_12_max nimmt der zur Zustellachse 14 lotrechte Durchmesser D_12 in Richtung der Öffnung 16 zumindest abschnittsweise stetig ab. Zu dem Ventilsitz 18 hin verjüngt sich die Kammer 12. Zu der Öffnung 16 hin verjüngt sich die Kammer 12. Somit ist die Innenkontur der Kammer 12 im Wesentlichen Tonnen-förmig ausgebildet.

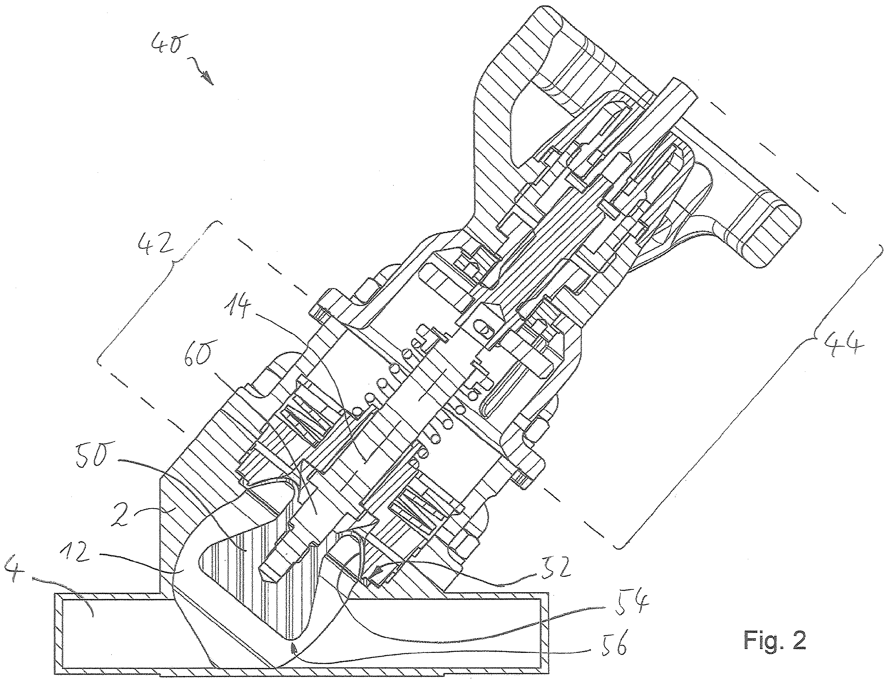

Figur 2 zeigt in einem schematischen Schnitt das Schrägsitzventil 40 in einer geöffneten Position. Das Schrägsitzventil 40 umfasst den Ventilkörper 2, ein an dem Ventilkörper 2 angeordnetes Zwischenstück 42 und einen Antrieb 44. Der Antrieb 44 ist vorliegend als Handantrieb ausgeführt, kann selbstverständlich aber auch als motorisierter Antrieb, beispielsweise mit einem Druckluftantrieb ausgestattet sein. In einer nicht gezeigten Ausführungsform ist das Zwischenstück 42 nicht vorhanden und der Antrieb 44 direkt mit dem Ventilkörper 2 verbunden.

In die Kammer 12 ist der Absperrkörper 50 eingebracht. Der radial äußere Bereich 52 des Membranabschnitts 54 des Absperrkörpers 50 ist zwischen dem Ventilkörper 2 und dem Zwischenstück 42 fluiddicht verklemmt. Ein distaler Sitzabschnitt 56 des Absperrkörpers 50 folgt abschnittsweise einer Torusform und ist im Schnitt abgerundet. Der Absperrkörper 50 ist ausgehend von dem Sitzabschnitt 56 mit einer distalen Fläche abgeschlossen. Der Absperrkörper 50 ist mit einer Ventilspindel 60 verbunden. Die Ventilspindel 60 wird von dem Antrieb 44 entlang der Zustellachse 14 bewegt, womit der Absperrkörper 50 entlang der Zustellachse 14 bewegt wird. In einer Ausführungsform ist der Absperrkörper 50 aus Polytetrafluorethylen, PTFE, gefertigt und der Ventilkörper 2 ist aus Edelstahl gefertigt.

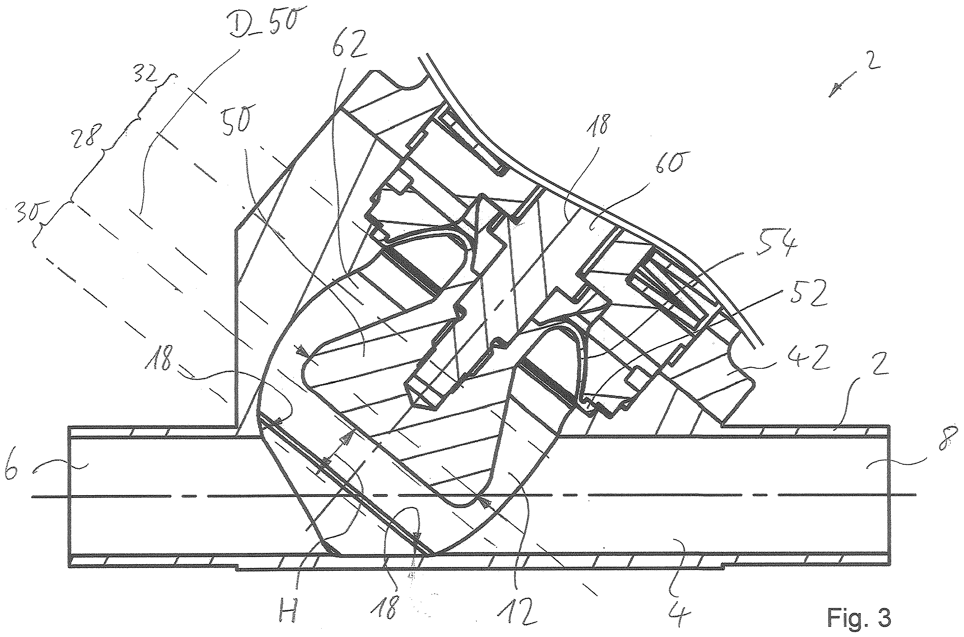

Figur 3 zeigt einen Ausschnitt aus Figur 2. Der Absperrkörper 50 befindet sich in einer Endlage, welche einem Öffnungszustand des Schrägsitzventils 40 entspricht. Der Absperrkörper 50 befindet sich in der gezeigten Endlage mit seinem größten Außendurchmesser D_50 in dem Mittenbereich 28. Ein Hub H zwischen dem Ventilsitz 18 und der gezeigten Endlage ist aufgrund der bauchigen Ausbildung der Kammer 12 derart gering, dass der Absperrkörper 50 in der gezeigten Endlage in den Kanal 4 hineinragt. Ausgehend von einem Abschnitt mit dem größten Außendurchmesser D_50 nimmt ein lotrecht zur Zustellachse 14 verlaufender Außendurchmesser des Absperrkörpers 50 in Richtung der Ventilspindel 60 ab. Durch die vorgenannte Außendurchmesserabnahme des Absperrkörpers und eine Innendurchmesserabnahme der Kammer 12 in Richtung des Antriebs wird ein vom Kanal 4 abgewandter Raum 62 freigegeben. Dieser Raum 62 wird also durch die bauchige bzw. Tonnen-förmige Ausbildung der Kammer 12 und die in Zustellrichtung, d. h. zum Ventilsitz 18 hin, vorhandene Durchmesserzunahme des Absperrkörpers 50 gebildet. Die Innendurchmesserabnahme der Kammer 12 in Richtung des Antriebs bietet den Vorteil, dass die Kammer 12 dadurch ohne Kanten und Sprünge im Querschnitt in den Membranabschnitt 54 übergeht und so keine ungewollten Schmutzbereiche entstehen. Ein Schmutzbereich wird beispielsweise dadurch gebildet, dass Innenwände des Ventilkörpers in einem Winkel im Bereich von 90° oder kleiner aufeinanderstoßen. Der Membranabschnitt 54 ist durch den zwischen dem Zwischenstück 42 und dem Ventilkörper 2 verklemmten radialen äußeren Bereich 52 gehalten.

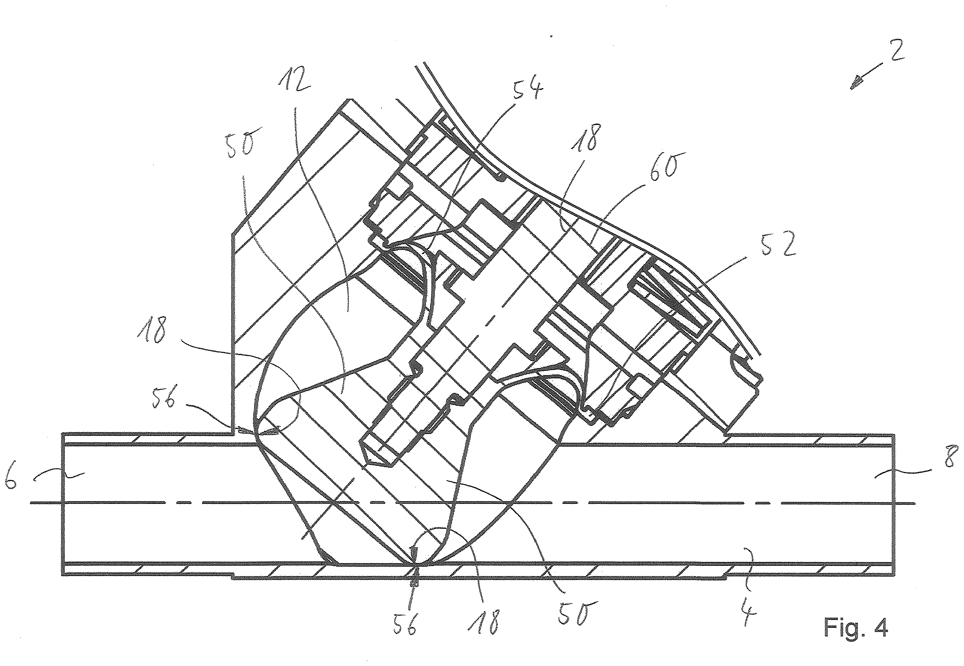

Figur 4 zeigt einen geschlossenen Zustand des Schrägsitzventils 40. In dem geschlossenen Zustand wird der Absperrkörper 50 so auf den Ventilsitz 18 gedrückt, dass der distale Sitzabschnitt 56 den Kanal 4 weichdichtend und fluiddicht verschließt.

## Patentansprüche

1. Ein Ventilkörper (2) für ein Schrägsitzventil (40), der Ventilkörper (2) umfassend:
- einen Kanal (4), welcher zwei Anschlüsse (6, 8) miteinander verbindet,
- einen Ventilsitz (18), und
- eine Kammer (12) zur Anordnung eines Absperrkörpers (50), wobei die Kammer (12) entlang einer Zustellachse (14) schräg in den Kanal (4) hineinführt, und wobei ein zur Zustellachse (14) lotrechter Durchmesser (D_12) der Kammer (12) in eine von dem Ventilsitz (18) abgewandte Richtung zumindest abschnittsweise stetig zunimmt,
**dadurch gekennzeichnet,**
- **dass** der Ventilsitz (18) in eine gedachte Verlängerung (24) des Kanals (4), welche durch die Kammer (12) führt, nicht hineinragt.

2. Der Ventilkörper (2) nach dem Anspruch 1, wobei der Ventilsitz (18) eine sich kegelstumpfförmig zur Mitte der Kammer (12) hin öffnende Fläche umfasst.

3. Der Ventilkörper (2) nach einem der vorstehenden Ansprüche, wobei der Ventilkörper (2) einen Befestigungsabschnitt (26) für einen radial äußeren Bereich (52) eines Membranabschnitts (54) des Absperrkörpers (50) umfasst, und wobei die Kammer (12) ausgehend von der Zunahme des Durchmessers zumindest abschnittsweise eine stetige Abnahme des zur Zustellachse (14) lotrechten Durchmessers (D_12) in Richtung des Befestigungsabschnitts (26) umfasst.

4. Der Ventilkörper (2) nach einem der vorstehenden Ansprüche, wobei sich ein größter Durchmesser (D_12_max) der Kammer (12) in einem Mittenbereich (28) der Kammer (12) befindet.

5. Ein Schrägsitzventil (40) mit einem Ventilkörper (2) nach einem der vorstehenden Ansprüche, das Schrägsitzventil (40) umfassend:
- den Absperrkörper (50);
- eine Ventilspindel (60), an der der Absperrkörper (50) befestigt ist; und
- einen Antrieb (44), der die Ventilspindel (60) und den Absperrkörper (50) entlang der Zustellachse (14) zu einem Öffnen oder Schließen des Kanals (4) bewegt.

6. Das Schrägsitzventil (40) nach dem Anspruch 5, wobei ein distaler Sitzabschnitt (56) des Absperrkörpers (50) einen abgerundeten Querschnitt aufweist.

7. Das Schrägsitzventil (40) nach dem Anspruch 5 oder 6, wobei ein Außenquerschnitt (D_50) des Absperrkörpers (50) in Richtung des Antriebs (44) zumindest abschnittsweise stetig abnimmt.

8. Das Schrägsitzventil (40) nach einem der Ansprüche 5 bis 7, wobei der Absperrkörper (50) in Richtung des Antriebs (44) einen Membranabschnitt (54) aufweist, wobei ein radial äußerer Bereich (52) des Membranabschnitts (54) zu dem Ventilkörper (2) festgelegt ist.

9. Das Schrägsitzventil (40) nach Anspruch 5 mit einem Ventilkörper nach Anspruch 4, wobei der Antrieb (44) und der Absperrkörper (50) derart aufeinander abgestimmt sind, sodass der Absperrkörper (50) sich in einer den Kanal (4) öffnenden Endposition mit seinem größten Außendurchmesser (D_50) in dem Mittenbereich (28) der Kammer (12) befindet.

## Claims

1. A valve insert (2) for a Y-type valve (40), with the valve insert (2) including:
- a canal (4) that connects two connections (6, 8),
- a valve seat (18), and
- a chamber (12) for arranging a block insert (50), whereby the chamber (12) runs slanted along a delivery axis (14) into the canal (4), and whereby a diameter (D_12) of the chamber (12) perpendicular to the delivery axis (14) gradually, constantly increases in a direction facing away from the valve seat (18),
distinguished by the fact that
- the valve seat (18) does not reach into an intended extension (24) of the canal (4) leading through the chamber (12).

2. The valve insert (2) as per claim 1, whereby the valve seat (18) includes a surface conically opening toward the middle of the chamber (12).

3. The valve insert (2) as per one of the preceding claims, whereby the valve insert (2) includes a fastening segment (26) for a radially external area (52) of a membrane segment (54) of the block insert (50), and whereby the chamber (12), based on the increase in diameter, includes at least a gradual, constant decrease in the diameter (D_12) perpendicular to the delivery axis (14) in the direction of the fastening segment (26).

4. The valve insert (2) as per one of the preceding claims, whereby a maximum diameter (D_12_max) of the chamber (12) is located in a middle area (28) of the chamber (12).

5. A Y-type valve (40) with a valve insert (2) as per one of the preceding claims, with the Y-type valve including:
- the block insert (50);
- a valve spindle (60) that the block insert (50) is connected to; and
- a propulsion (44) that causes the valve spindle (60) and the block insert (50) along the delivery axis (14) to open or close the canal (4).

6. The Y-type valve (40) as per claim 5, whereby a distal seat segment (56) of the block insert (50) has a rounded cross-section.

7. The Y-type valve (40) as per claim 5 or 6, whereby an outer cross-section (D_50) of the block insert (50) at least gradually, constantly decreases in the direction of the propulsion (44).

8. The Y-type valve (40) as per one of the claims 5 to 7, whereby the block insert (50) has a membrane segment (54) in the direction of the propulsion (44), whereby a radially external area (52) of the membrane segment (54) is aligned with the valve insert (2).

9. The Y-type valve (40) as per claim 5 with a valve insert as per claim 4, whereby the propulsion (44) and the block insert (50) are coordinated with one another such that the block insert (50) is located in an end position opening to the canal (4) with its largest external diameter (D_50) in the middle area (28) of the chamber (12).

## Revendications

1. Corps de soupape (2) pour une soupape à siège oblique (40), le corps de soupape (2) comprenant :
- un canal (4), lequel relie deux raccords (6, 8) l'un à l'autre,
- un siège de soupape (18), et
- une chambre (12) pour la disposition d'un corps d'arrêt (50), dans lequel la chambre (12) mène à l'intérieur du canal (4) de manière oblique le long d'un axe d'avance (14), et dans lequel un diamètre (D_12), perpendiculaire à l'axe d'avance (14), de la chambre (12) augmente progressivement au moins en partie dans une direction opposée au siège de soupape (18),
**caractérisé en ce**
- **que** le siège de soupape (18) ne fait pas saillie dans un prolongement (24) imaginaire, lequel mène à travers la chambre (12), du canal (4).

2. Corps de soupape (2) selon la revendication 1, dans lequel le siège de soupape (18) comprend une surface s'ouvrant de façon tronconique en direction du centre de la chambre (12) .

3. Corps de soupape (2) selon l'une quelconque des revendications précédentes, dans lequel le corps de soupape (2) comprend une partie de fixation (26) pour une zone (52) radialement extérieure d'une partie membrane (54) du corps d'arrêt (50), et dans lequel la chambre (12) comprend à partir de l'augmentation du diamètre au moins en partie une diminution progressive du diamètre (D_12) perpendiculaire à l'axe d'avance (14) en direction de la partie de fixation (26) .

4. Corps de soupape (2) selon l'une quelconque des revendications précédentes, dans lequel un plus grand diamètre (D_12_max) de la chambre (12) se trouve dans une zone centrale (28) de la chambre (12).

5. Soupape à siège oblique (40) avec un corps de soupape (2) selon l'une quelconque des revendications précédentes, la soupape à siège oblique (40) comprenant :
- le corps d'arrêt (50) ;
- une tige de soupape (60), sur laquelle le corps d'arrêt (50) est fixé ; et
- un entraînement (44), qui déplace la tige de soupape (60) et le corps d'arrêt (50) le long de l'axe d'avance (14) vers une ouverture ou fermeture du canal (4).

6. Soupape à siège oblique (40) selon la revendication 5, dans laquelle une partie de siège distale (56) du corps d'arrêt (50) présente une section transversale arrondie.

7. Soupape à siège oblique (40) selon la revendication 5 ou 6, dans laquelle une section transversale extérieure (D_50) du corps d'arrêt (50) diminue progressivement au moins en partie en direction de l'entraînement (44).

8. Soupape à siège oblique (40) selon l'une quelconque des revendications 5 à 7, dans laquelle le corps d'arrêt (50) présente en direction de l'entraînement (44) une partie membrane (54), dans laquelle une zone (52) radialement extérieure de la partie membrane (54) par rapport au corps de soupape (2) est définie.

9. Soupape à siège oblique (40) selon la revendication 5 avec un corps de soupape selon la revendication 4,
dans laquelle l'entraînement (44) et le corps d'arrêt (50) sont adaptés l'un à l'autre de telle sorte que le corps d'arrêt (50) se trouve dans une position d'extrémité ouvrant le canal (4) avec son plus grand diamètre extérieur (D_50) dans la zone centrale (28) de la chambre (12).
